# EUROPÄISCHE PATENTSCHRIFT

(11) **EP 2 972 082 B1**
(45) Veröffentlichungstag und Bekanntmachung des Hinweises auf die Patenterteilung: **06.06.2018**
(21) Anmeldenummer: 14709292.8
(22) Anmeldetag: 11.03.2014
(51) Int. Cl.: G01C 15/00, G01S 17/08

(54) **ENTFERNUNGSMESSGERÄT**
DISTANCE MEASURING DEVICE
APPAREIL DE MESURE DE DISTANCE

(30) Priorität: 13.03.2013 DE 102013004266
(43) Veröffentlichungstag der Anmeldung: 20.01.2016
(73) Patentinhaber: Robert Bosch GmbH, 70442 Stuttgart (DE)
(72) Erfinder: HOELZLWIMMER, Stephanie, 70178 Stuttgart (DE); ZAMORANO-CALDERON, Irene, 70182 Stuttgart (DE); PRAGER, Stefanie, 70184 Stuttgart (DE); GROS, Nicolas, 70599 Stuttgart (DE)
(86) Internationale Anmeldenummer: PCT/EP2014/054714
(87) Internationale Veröffentlichungsnummer: WO 2014/140020

(56) Entgegenhaltungen:
- DE-A1-102008 037 486
- DE-A1-102009 029 372
- US-A- 5 806 020
- US-A1- 2004 060 376
- Robert Bosch Gmbh: "Press release", , 24. September 2010 (2010-09-24), XP55116014, Gefunden im Internet: URL:http://www.bosch-presse.de/presseforum /pressdownload/text/PI7173.pdf?id=4836,2 [gefunden am 2014-04-30]

## Beschreibung

### Stand der Technik

Die vorliegende Erfindung betrifft ein Entfernungsmessgerät, insbesondere ein elektro-optischen Entfernungsmesser, wie beispielsweise einen Laserentfernungsmesser, zur Längenbestimmung, sowie ein Verfahren zum Bedienen eines solchen Entfernungsmessgerätes.

Elektro-optische Entfernungsmesser, wie beispielsweise Laserentfernungsmesser, werden heute eingesetzt, um einfach, schnell und genau Entfernungen zwischen zwei Punkten zu bestimmen. Aus diesen Messwerten und weiteren Angaben, wie beispielsweise dem Winkel zwischen zwei Messrichtungen können dann auch Berechnungen zu Flächen und Volumina durchgeführt werden. Die Steuerung des Gerätes erfolgt in der Regel über eine am Gerät selbst vorgesehene Tastatur. Das Messergebnis - Länge, Fläche oder Volumen - wird typischerweise auf einem Display des Gerätes, welches als Anzeigeeinheit dient, angezeigt

Aus der DE 196 48 626 A1 ist ein Verfahren und eine Vorrichtung zur Flächen- und Raumvermessung bekannt, das darauf beruht, dass von einer zentralen Stelle in dem zu vermessenden Raum alle zu erfassenden Raum- und Flächeneckpunkte mit einem Laserstrahl anvisiert und beaufschlagt werden. Von dem jeweils reflektierten Laserstrahl werden - aus der Entfernung und den zugehörigen Winkeln - die 3D-Werte der Eckpunkte ermittelt und eine maßstabsgerechte Zeichnung erstellt. Die in der DE 196 48 626 A1 offenbarte Vorrichtung umfasst einen Laserentfernungsmesser bestehend aus einem Lasersender und einem Laserempfänger, der über eine Kipp- und Dreheinrichtung zur Ausrichtung und Winkelmessung auf einem Stativ angebracht ist. Desweiteren umfasst die Vorrichtung der DE 196 48 626 A1 ein Zielfernrohr und eine elektronische Auswerteeinheit zur Winkeldaten- und Entfernungsdaten-Erfassung und -Übergabe sowie einen damit verbundenen Computer.

Das in der DE 196 48 626 A1 offenbarte Verfahren ist recht aufwendig und bedarf einer längeren Einweisung des Bedieners, da bei jeder Messung zuvor unter anderem ein Bezugskoordinatensystem ermittelt werden muss. Desweiteren ist ein zusätzlicher externer Computer für das vorgestellte Verfahren notwendig, der die Kosten und die Bedienerfreundlichkeit dieses Messsystems zusätzlich negativ beeinflusst.

Aus der DE 10 104 877 A1 ist ein Gerät und ein Verfahren zur Längen-, Flächen-, oder Volumenmessung mittels eines Entfernungsmessgerätes bekannt. Dieses Messgerät weist hierzu eine Sende- und einer Empfangseinheit in einem Gehäuse, ein Tastenfeld zur Bedienung des Messgerätes und einen integrierten Rechner zur Messdatenauswertung auf. Das Gerät der DE 10 104 877 A1 besitzt zudem ein Anzeigefeld in Form eines Displays zur Darstellung der Messergebnisse.

Bei dem Gerät der DE 10 104 877 A1 zeigt das Anzeigefeld des Messgerätes nach Vorauswahl eines gewünschten Messmodus (Strecke, Fläche, Volumen) welche insbesondere durch die Betätigung nur einer Taste des Tastenfeldes des Gerätes vorgenommen wird, mit Hilfe einer symbolischen Graphik an, welche zur Bestimmung der gewünschten Messgröße erforderlichen Einzelmessungen noch durchzuführen sind.

Der vorliegenden Erfindung liegt die Aufgabe zugrunde, ein Verfahren und eine Vorrichtung zur Längenmessung zu schaffen, welche in ihren Messergebnissen genau sind und dabei für den Benutzer einfach und intuitiv zu verstehen und sicher zu bedienen sind.

Diese Aufgabe wird erfindungsgemäß gelöst durch die Merkmale der unabhängigen Ansprüche. Zweckmäßige Ausgestaltungen und Weiterentwicklungen der Erfindung sind mit den Merkmalen der abhängigen Ansprüche aufgezeigt.

Diesbezüglich seien die Schriften US 5 806 020 A, US 2004/060376 A1, DE 10 2009 029 372 A1 und DE 10 2008 037486 A1 genannt, die bereits Bedienkonzepte vorschlagen, die einem Benutzer eines Messgeräts die Bedienung durch Erhöhung der intuitiven Verständlichkeit vereinfachen.

### Offenbarung der Erfindung

Der erfindungsgemäße Entfernungsmesser, der als elektro-optischer Entfernungsmesser, insbesondere als ein Laserentfernungsmesser, insbesondere als ein handgehaltener Laserentfernungsmesser ausgebildet ist, weist ein Gehäuse und eine im Gehäuse angeordneten Sendeeinheit zum Aussenden eines Messsignals in Richtung auf ein Messobjekt hin, sowie mit eine Empfangseinheit zum Empfang von vom Messobjekt rücklaufender Messstrahlung auf. Das Gerät weist zudem eine Rechen- und/oder Auswerteeinheit zur Bestimmung von Entfernungsmessdaten bzw. zur Bestimmung von aus den Entfernungsmessdaten abgeleiteten Messgrößen auf. Zudem weist der erfindungsgemäße Entfernungsmesser ein erstes Bedienelement zur Auslösung zumindest einer Entfernungsmessung auf, wobei dieses erste Bedienelement in der Art eines Schiebelementes ausgebildet ist.

Bisher bekannte, handgehaltene Entfernungsmesser weisen fast ausnahmslos ein Bedienfeld in Form einer Tastatur mit einer Mehrzahl von Tasten zur Betätigung des Gerätes auf. Eine derartige Tastatur vergrößert das Gerät sowie die Komplexität des Gerätes und induziert Verunsicherungen und Messfehler bei einem nicht geübten Anwender. Darüber hinaus hat die Erfahrung gezeigt, dass zahlreiche Anwender durch die Vielzahl von Tasten und Funktionen vom Kauf, bzw. von der Benutzung eines einmal gekauften elektro-optischen Entfernungsmessers abgeschreckt werden. Besitzer von handgehaltenen elektro-optischen Entfernungsmessern nutzen häufig nur einige, wenige Hauptfunktionen des Gerätes, wie beispielsweise die Längenmessung, Dauermessung oder die Addition von Strecken. Komplexere Messverfahren, die ein solches Gerät ebenfalls ermöglicht, wie beispielsweise die indirekte Höhenmessung, Absteckfunktionen oder dergleichen werden verhältnismäßig selten verwendet.

Bei dem erfindungsgemäßen Gerät wird die Messung durch ein einzelnes Bedienelement gestartet. Dieses Bedienelement ist der einfachen Bedienung halber in der Art eines Schiebelementes ausgeführt.

Durch die Reduzierung der Anzahl der Bedienelemente des elektro-optischen Entfernungsmessgerätes können diese Bedienelemente größer und bedienerfreundlich ausgestaltet werden, als dies bei einem Gerät mit einem Tastenfeld möglich wäre.

Dies ermöglicht ein kleines, kompaktes Gerät, dessen Bedienelemente aber noch hinreichend groß sind, um eine einfache und komfortable Bedienung zu ermöglichen.

Darüber hinaus liegt der Erfindung die Erkenntnis zugrunde, dass sich mit dem als Schiebeschalter ausgebildeten Bedienelement mehrere Funktionen in einfacher Weise realisieren lassen, ohne dass dies beispielsweise mit einer Mehrfachbelegung des Bedienelementes einhergehen muss, wie dies beispielsweise bei den Tasten einer Tastatur typischerweise umgesetzt ist.

Im passiven Zustand des Entfernungsmessgerätes, d.h. in dem Zustand, in dem das Gerät nicht eingeschaltet ist, dient das als Schiebeschalter ausgebildete erste Bedienelement des erfindungsgemäßem Entfernungsmessers gleichzeitig auch als Schutz und Abdichtung eines zweiten Bedienelementes.

Das erste Bedienelement zur Auslösung einer Entfernungsmessung ist vorteilhafter weise verschiebbar am oder im Gehäuse des erfindungsgemäßen Entfernungsmessgerätes ausgebildet.

Dabei kann das Bedienelement im Wesentlichen in Richtung des Messsignals verschiebbar am Gehäuse angeordnet sein. Das Bedienelement lässt sich dabei in Richtung auf das Messobjekt hin und/oder vom Messobjekt weg, vorzugsweise parallel zur Messrichtung, verschieben. In Richtung des Messsignals heißt dabei entlang der Messachse, jedoch in beide Richtungen, auf das Target hin, als auch vom Target weg. Dies ermöglicht es einem Anwender in Sichtkontakt mit dem Target zu stehen und gleichzeitig das als Schiebeschalter ausgebildete Bedienelement zu betätigen.

Insbesondere kann das Bedienelement zur Auslösung einer Entfernungsmessung parallel zu den Längskanten des Gehäuses des Messgerätes verschoben werden. Das Gehäuse des Entfernungsmessgerätes weist hierzu Führungselemente auf, die es ermöglichen, dass das erste Bedienelement verschieblich an dem Gehäuse des Messgerätes angeordnet ist.

Insbesondere erfolgt die Verschiebung des ersten Bedienelementes in einer Ebene, d.h. insbesondere ohne einen Höhenversatz.

So kann das erfindungsgemäße Bedienelement des Entfernungsmessers in einer ersten Position, insbesondere einer ersten Schiebeposition, zumindest eine Entfernungsmessung starten. So kann beispielsweise durch das "Herunterziehen" des als Schieber ausgebildeten Bedienelementes, d.h. das Verschieben des Bedienelementes vom Zielobjekt weg, typischerweise hin auf einen das Messgerät in der Hand haltenden Anwender, der Messstrahl, beispielsweise ein der Entfernungsmessung dienender Laserstrahl, angeschaltet werden, um eine Entfernungsmessung zu starten. Das Messsignal wird durch eine entsprechende Recheneinheit ausgewertet, so dass das Messergebnis beispielsweise auch in einem Display angezeigt werden kann.

In einer vorteilhaften Ausgestaltung des erfindungsgemäßen Entfernungsmessgerätes kann das Bedienelement in einer ersten Position, insbesondere in einer ersten Schiebeposition, auch eine kontinuierliche Abfolge von Entfernungsmessungen, d.h. eine dauerhafte Entfernungsmessung startet. Das Messergebnis wird jeweils ausgewertet und kann dann auch kontinuierlich aktualisiert werden, falls sich die Messbedingungen, wie beispielsweise der Abstand des Messgerätes zum Target, verändert. Das jeweils aktuelle Messergebnis der Entfernungsmessung kann dann, beispielsweise über ein Display, an den Anwender übermittelt werden.

So kann ein Anwender mit einer einzigen Bewegung des Bedienelementes eine kontinuierliche Längenmessung starten.

Das erfindungsgemäße Entfernungsmessgerät erlaubt damit eine einfache und intuitive Benutzung. In vorteilhafter Weise ergibt sich damit auch ein intuitiv zugängliches Verfahren zum Betrieb eines Entfernungsmessgerätes, insbesondere eines handgehaltenen Laserentfernungsmessers, bei dem mittels eines ersten am Gehäuse des Entfernungsmessgerätes vorgesehenen Bedienelementes zumindest eine erste Entfernungsmessung gestartet wird, wobei vorteilhafter Weise das erste Bedienelement zur Auslösung einer ersten Entfernungsmessung, insbesondere zur Auslösung einer Abfolge von Entfernungsmessungen, insbesondere einer Abfolge von kontinuierlichen Entfernungsmessungen, aus einer zweiten Position (B), in der das Entfernungsmessgerät ausgeschaltet ist, in eine erste Position (A) verschoben, insbesondere entlang der Messachse der Entfernungsmessung, verschoben wird. Dabei kann das Bedienelement im Wesentlichen in Richtung des Messsignals verschiebbar angeordnet sein. Das Bedienelement lässt sich dabei in Richtung auf das Messobjekt hin und/oder vom Messobjekt weg, vorzugsweise parallel zur Messrichtung, verschieben. "In Richtung des Messsignals" heißt dabei entlang der Messachse, jedoch in beide Richtungen, auf das Target hin, als auch vom Target weg.

Insbesondere kann die Verschiebung des ersten Bedienelementes entlang einer Achse des Gehäuses des Entfernungsmessgerätes erfolgen.

Insbesondere kann die Verschiebung des ersten Bedienelementes entlang der Längsachse des Entfernungsmessgerätes erfolgen.

Insbesondere kann das Bedienelement zur Auslösung einer Entfernungsmessung parallel zu den Längskanten des Gehäuses des Messgerätes verschoben werden. So kann das erfindungsgemäße Bedienelement des Entfernungsmessers in einer ersten Position, insbesondere einer ersten Schiebeposition, zumindest eine Entfernungsmessung starten. Wird das als Schieber bzw. Schiebelement ausgebildeten Bedienelement beispielsweise in Richtung eines Anwenders, der das Gerät in der Hand hält, "heruntergezogen", d.h. verschoben, also vom Zielobjekt weg auf den Anwender hin verschoben, so wird das Messsignal eingeschaltet und der Messstrahl, insbesondere beispielsweise ein der Entfernungsmessung dienender Laserstrahl auf ein Zielobjekt hin ausgesendet und die Entfernungsmessung automatisch gestartet. Hierbei kann nicht nur lediglich eine Entfernungsmessung erfolgen, sondern in vorteilhafter Weise wird eine Folge, insbesondere eine kontinuierliche Folge von Entfernungsmessungen gestartet. Das erfindungsgemäße Entfernungsmessgerät besitzt ein zweites Bedienelement, beispielsweise ein Druck- bzw. Tastbedienelement, das es ermöglicht, eine Entfernungsmessung, insbesondere eine kontinuierliche, d.h. dauerhafte Entfernungsmessung zu stoppen und / oder wieder zu starten und/oder zur Anzeige auf einem Display des Gerätes zu bringen.

Das zweite Bedienelement muss dabei erfindungsgemäß nicht als Druck- bzw. Tastbedienelement ausgebildet sein, sondern kann auch andere mögliche Ausführungsformen, beispielsweise auch die eines Schiebeschalters, annehmen.

Die durch Betätigung des als Schiebeschalters ausgebildeten ersten Bedienelements ausgelöste Entfernungsmessung, insbesondere eine solche kontinuierliche Entfernungsmessung, kann mit dem zweiten Bedienelement, insbesondere einem Druck- bzw. Tastbedienelement, gestoppt, bzw. "eingefroren" werden. Das zweite Bedienelement dient somit als eine sogenannte "Hold"-Taste, die einen einzelnen Messwert festhält, indem dieser Wert auf dem Display zu Anzeige gebracht wird und/oder in einem Speichermedium des Messgerätes angelegt wird.

Während also das erste Bedienelement eine Entfernungsmessung startet, bzw. eine Abfolge von Entfernungsmessungen startet, wird mit dem zweiten Bedienelement eine spezielle Entfernungsmessung aus der Abfolge der Messungen ausgewählt, d.h. "eingefroren".

So kann erfindungsgemäß auch vorgesehen sein, dass das zweite Bedienelement eine kontinuierliche, d.h. dauerhafte Entfernungsmessung stoppt, insbesondere ein Aussenden eines Messsignals in Richtung auf ein Messobjekt, stoppt. Das erfindungsgemäße Messgerät weist ein zweites Bedienelement, insbesondere ein Druck-Bedienelement, auf, welches es in Abhängigkeit von der Position des ersten, als Schiebelement ausgebildeten Bedienelementes ermöglicht, eine Entfernungsmessung, insbesondere eine kontinuierliche, d.h. dauerhafte Entfernungsmessung, zu starten und/oder zur Anzeige auf einem Display des Gerätes zu bringen.

So kann beispielsweise durch nochmaliges Betätigen des als "Hold"-Taste dienenden, zweiten Bedienelementes das Gerät in den kontinuierlichen Messmodus zurückkehren. Der zuvor "eingefrorene" Messwert kann dabei beispielsweise abgespeichert und/oder im Display des Gerätes angezeigt werden, während die kontinuierliche Abfolge von Entfernungsmessungen wieder gestartet wird Vorteilhafter Weise ermöglicht es das als Schiebeelement ausgebildete, erste Bedienelement in einer zweiten Position, insbesondere einer zweiten Schiebeposition, das Entfernungsmessgerät auszuschalten.

In dieser zweiten Schiebeposition kann das als Schiebeschalter ausgebildete erste Bedienelement das zweite Bedienelement überdecken und damit dessen Betätigung verhindern. Das zweite Bedienelement ist in einer Position der ersten Bedienelementes von diesem abgedeckt oder überdeckt. Das erfindungsgemäße Bedienkonzept, bzw. die erfindungsgemäßen Bedienelemente und deren relative Anordnung zueinander ermöglichen es somit, ein sehr kompaktes, intuitiv zugängliches Entfernungsmessgerät zu realisieren, dessen Bedienelemente gleichzeitig auch als Schutzelemente genutzt sind.

Das erfindungsgemäße Entfernungsmessgerät ist bevorzugt ein handgehaltenes Entfernungsmessgerät. Als Messstrahlung kann hierbei insbesondere Laserstrahlung, Ultraschall aber auch Radarstrahlung Verwendung finden.

Besonders vorteilhaft ist das erfindungsgemäße Entfernungsmessgerät als ein handgehaltener Laser-Entfernungsmesser und dabei insbesondere mit einem SPAD -Detektor ausgebildet. Der SPAD-Detektor (Single Photon Avalanche Diode) lässt sich - gegebenfalls auch zusammen mit einem Referenzdetektor - auf einem IC integrieren, so dass die gesamte Elektronik des erfindungsgemäßen Entfernungsmessgerätes sehr kompakt ausgebildet sein kann.

Zusammen mit den erfindungsgemäßen Bedienelementen und/oder deren zumindest zeitweise überlappenden Anordnung ergibt sich ein sehr kompaktes Messgerät.

### Zeichnung

In der Zeichnung sind Ausführungsbeispiele der Erfindung, insbesondere des erfindungsgemäßen Entfernungsmessgerätes dargestellt, die in der nachfolgenden Beschreibung näher erläutert wird. Ein Fachmann erkennt, dass die Merkmale einzelner Ausführungsbeispiele beliebig miteinander zu kombinieren sind.

Es zeigen:
Fig. 1 eine perspektivische Darstellung eines erfindungsgemäßen Entfernungsmessgerätes,
Fig. 2 die Darstellung des erfindungsgemäßen Entfernungsmessgerätes gemäß Figur 1 in einer Aufsicht,
Fig. 3 perspektivische Darstellung eines erfindungsgemäßen Entfernungsmessgerätes mit einer schematischen Darstellung des Displays.
Fig. 4 eine Aufsicht des erfindungsgemäßen Entfernungsmessgerätes im ausgeschalteten (4a) und eingeschalteten (4b) Modus.

### Beschreibung der Ausführungsbeispiele

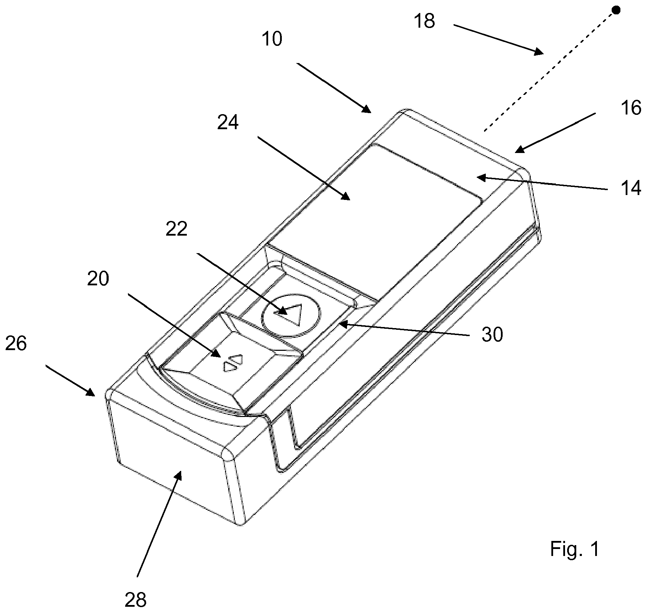

Die in Figur 1 in perspektivischer Ansicht dargestellte Ausführungsform eines erfindungsgemäßen Entfernungsmessgerätes 10 zeigt einen handhaltbaren, sehr kompakten Laserentfernungsmesser. Das Gehäuse 12 der Ausführungsform gemäß Figur 1 ist im Wesentlichen quaderförmig ausgebildet und besitzt leicht abgerundete Kanten bzw. Ecken. Die Maße dieses Gerätegehäuses 12 liegen im Bereich von 100mm * 26mm *23mm (Länge * Breite * Höhe). Das erfindungsgemäße Gerät besitzt auf seiner Oberseite 14 ein Display 24, welches es ermöglicht, Messergebnisse und andere Informationen an einen Anwender zu übermitteln. An seinem oberen, einem Target zugewandten Ende 16 besitzt das Gehäuse 12 eine in Figur 1 nicht einsehbare Austrittsöffnung, mittels der die Messstrahlung 18 das Gehäuse 12 des Messgerätes in Richtung auf ein Target hin verlassen kann. Ebenso besitzt das Gehäuse 12 des erfindungsgemäßen Entfernungsmessgerätes eine Eintrittsöffnung, um das vom Target rücklaufende Messsignal in das Gerät 10 wieder einzukoppeln und einer Detektion und Auswertung zuzuführen.

Auf der unteren, dem Target abgewandten Hälfte der Oberseite 14 des Gehäuses 12 weist das in Figur 1 dargestellte Ausführungsbeispiel eines erfindungsgemäßen Entfernungsmessgerätes 10 zwei Bedienelemente 20 und 22 auf. Das erste Bedienelement 20 ist dabei erfindungsgemäß als Schiebeschalter ausgebildet.

In der Abbildung der Figur 1 ist das erste Bedienelement 20 in seiner ersten Position (A) angeordnet.

Das als Schiebeschalter ausgebildete erste Bedienelement 20 wird dabei in vorteilhafter Weise in Richtung der Messachse des Messsignals 18 verschoben. Insbesondere wird das Bedienelement 20 zur Auslösung einer Entfernungsmessung parallel zu den Längskanten des Gehäuses 12 des Messgerätes 10 verschoben. Das Gehäuse 12 des Entfernungsmessgerätes weist hierzu Führungselemente 30 auf, die es ermöglichen, dass das erste Bedienelement 20 verschieblich an dem Gehäuse 12 des Messgerätes 10 angeordnet ist. Insbesondere erfolgt die Verschiebung des ersten Bedienelementes 20 in einer Ebene, insbesondere zur Geräteoberfläche 14 parallelen Ebene, d.h. ohne einen Höhenversatz.

Prinzipiell ist in alternativen Ausführungsformen natürlich auch eine Verschiebung des ersten Bedienelementes quer zur Messachse des Messgerätes möglich bzw. könnte eine solche Verschiebung auch mit einem Höhenversatz erfolgen.

In einer Ebene, insbesondere parallelen Ebene unter der Verschiebeebene des ersten Bedienelements 20 ist ein zweites Bedienelement 22 des erfindungsgemäßen Entfernungsmessgerätes angeordnet. Das erste Bedienelement 20 ist also mit einem relativen Höhenversatz gegenüber dem zweiten Bedienelement 22 am Gehäuse 12 des Entfernungsmessgerätes 10 angeordnet. Dieser Höhenversatz zwischen den beiden Bedienelementen ermöglicht es, dass das erste Bedienelement 20 über dem zweiten Bedienelement 22 hinweg verschoben werden kann und damit auch über diesem zweiten Bedienelement 22 zu liegen kommen kann, wenn das erste Bedienelement 20 in seine zweite Verschiebeposition B in Richtung des Targets, bzw. des vorderen Endes 16 des Gehäuse 12 des Messgerätes 10 verschoben wird. In dieser zweiten Stellung B des ersten Bedienelementes 20 deckt dieses das zweite Bedienelement 22 ab und bietet somit einem guten Schutz vor Fehlbedienungen und Stößen des zweiten Bedienelementes 22.

In der in Figur 1 dargestellten ersten Verschiebeposition A des ersten Bedienelementes 20 schaltet das erste Bedienelement 20 die Messstrahlung 18 ein. Ist das erste Bedienelement 20 in seiner ersten Position A angeordnet, wird die Messstrahlung 18 auf ein zu vermessendes Target gesendet und nach Reflektion an diesem Target wird er von dem Messgerät 10 detektiert. In vorteilhafter Weise kann der im Gerät integrierte Detektor zumindest einen SPAD-Detektor (Single Photon Avalanche Diode) aufweisen. Hierbei handelt es sich um eine im Geiger Mode betriebene Avalanche Diode. Ein solcher SPAD Detektor lässt sich in einem IC (Integrated Circuit) integrieren, was zu einer zusätzlichen Reduzierung der Größe des erfindungsgemäßen Entfernungsmessgerätes führt.

Mittels einer in Figur 1 nicht dargestellten, sich im Gehäuse 12 des Messgerätes 10 befindlichen Auswerteelektronik kann die Distanz zwischen dem Entfernungsmessgerät 10 und einem anvisierten Target berechnet werden und auf einem Display 24 ausgegeben werden.

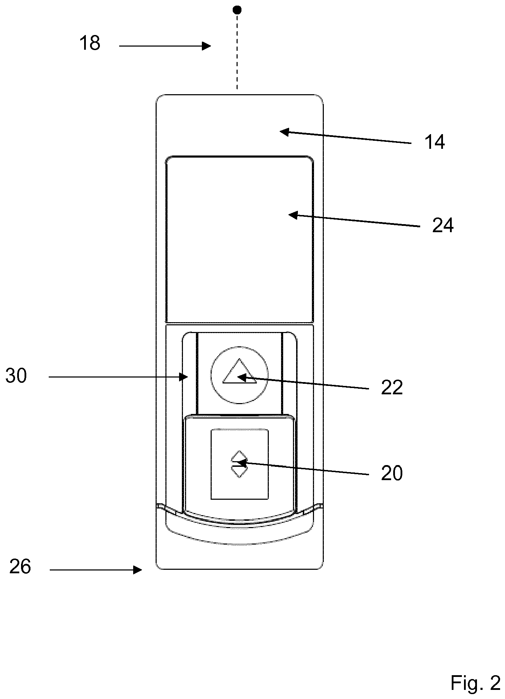

Figur 2 zeigt das Messgerät 10 aus der Figur 1 in einer Aufsicht, die die Anordnung von Display 24, erstem 20 und zweiten 22 Bedienelement in dieser Ausführungsform des erfindungsgemäßen Messgerätes 10 noch einmal verdeutlicht. Gleiche Bauteile sind dabei mir gleichen Bezugszeichen versehen.

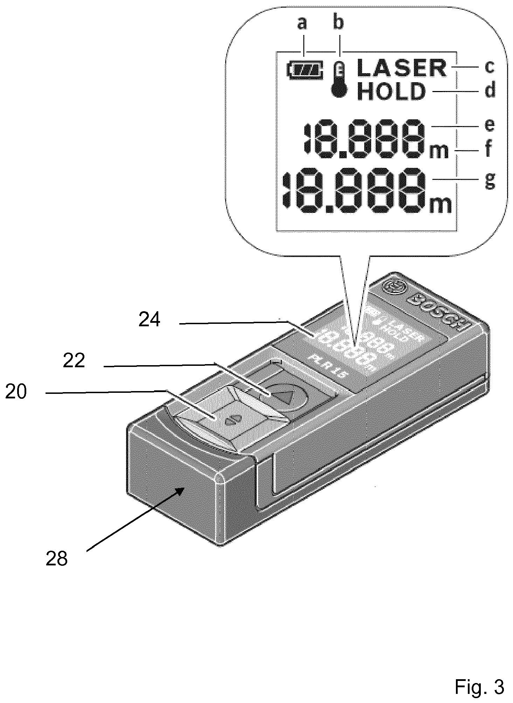

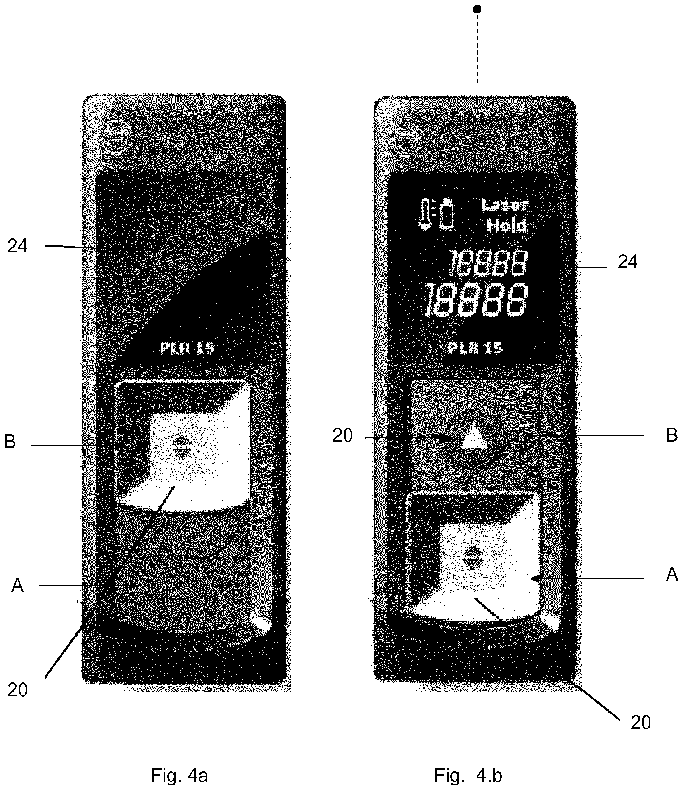

Nachfolgend soll anhand der Figuren 3 und 4 die Funktions- und Bedienweise des erfindungsgemäßen Entfernungsmessers 10 etwas detaillierter erläutert werden.

Figur 4a zeigt ein erfindungsgemäßes Entfernungsmessgerät 10 im ausgeschalteten Zustand. Das erste Bedienelement 20 steht in seiner zweiten, dem vorderen Ende 16 des Gehäuses 12 des Messgerätes 10 zugewandten Position B und deckt damit gleichzeitig auch das darunter liegende zweite Bedienelement 22 ab.

Zum Einschalten des Messgerätes 10 wird das als Ein-/Ausschalter dienende erste Bedienelement 20 nach hinten, d.h. aus Richtung des vorderen Endes 16 des Gehäuse 12 weg in Richtung auf das hintere Ende 26 des Gehäuse 12 hin verschoben. Erreicht der Schiebeschalter 20 dabei seine erste Position A wird das Messgerät 10 eingeschaltet. Beim Einschalten des Messgerätes 10 wird insbesondere eine im Messgerät vorhandene Lichtquelle, wie beispielsweise eine Laserdiode eingeschaltet, so dass das im Ausführungsbeispiel als Laserstrahl ausgebildete Messsignal 18 eingeschaltet wird. Im Display 24 des Messgerätes 10 kann dabei an einer Stelle/Position c eine Anzeige "LASER" wiedergegeben werden, indem dieser Begriff "LASER" beispielsweise aufblinkt (siehe hierzu insbesondere auch Figur 3), um einem Anwender zu signalisieren, dass Laserstrahlung aus dem Gerät austritt, bzw. eine Messung aktiv ist

Nach dem Einschalten des Messwerkzeugs 10 durch Verschieben des ersten Bedienelementes 20 erfolgt automatisch eine kontinuierliche Messung des Abstandes zwischen dem Entfernungsmessgerät und dem Target. Man kann nun beispielsweise mit dem sichtbaren Laserstrahl des Messgerätes die Zielfläche bzw. ein Target anvisieren. Der Abstand des Messgerätes zu dem Target wird über das zurück ins Messgerät reflektierte Messsignal bestimmt, und mittels des am Gerät vorgesehenen Displays 24 ausgegeben. Der aktuelle Messwert wird insbesondere in der unteren Zeile g des Displays 24 angezeigt (siehe hierzu wiederum Figur 3). Während der durch das Verschieben des ersten Bedienelementes gestarteten kontinuierlichen Entfernungsmessung kann das Messgerät relativ zum Ziel bewegt werden, wobei der aktuelle gemessene Entfernungsmesswert dabei ca. alle 0,5 Sekunden in der unteren Zeile g des Displays 24 aktualisiert und ausgegeben wird. Man kann sich somit beispielsweise von einer Wand bis zum gewünschten Abstand von der Wand entfernen; die aktuelle Entfernung des Messgerätes zu der Wand ist stets im Display 24 ablesbar. Die Anzeige "LASER" blinkt im Display 24 an der Stelle c auf, um einem Anwender zu signalisieren, dass das Messsignal eingeschaltet ist und aktuell Entfernungsmessungen vorgenommen werden.

Die Bezugsebene für die Entfernungsmessung ist dabei die Hinterkante 26 des Messgerätes 10. Für eine Messung von Wand zu Wand zum Beispiel, wird das Messgerät 10 mit seiner Hinterkante 26 an der Ausgangswand angelegt. In alternativen Ausführungsformen können auch andere Referenzebenen, wie beispielsweise die vordere Seite 16 des Messgerätes oder auch ein mit dem Gerät verbundener Messanschlag realisiert sein.

Um einen Messvorgang anzuhalten, wird das zweite Bedienelement 22 gedrückt. Der Laserstrahl wird ausgeschaltet und die Anzeige "HOLD" erscheint im Display 24 an der Stelle/Position d. Der aktuelle Messwert wird weiterhin in der unteren Zeile g des Displays 24 angezeigt, aber er wird nicht mehr dauernd aktualisiert.

Wird die "HOLD"-Taste, d.h. das zweite Bedienelement 22 erneut gedrückt, so wird der Laser wiederum eingeschaltet. Die Anzeige "LASER" blinkt im Display 24 an der Stelle c wieder auf. In der oberen Zeile e des Displays 24 wird der vorhergehende, "eingefrorene" Messwert angezeigt. In der unteren Zeile g des Displays 24 wird der dauernd aktualisierte/ aktuelle Messwert angezeigt.

Wird die "HOLD"-Taste 22 erneut gedrückt, wird wiederum der Messvorgang angehalten, der Laserstrahl wird ausgeschaltet und die Anzeige "HOLD" erscheint im Display 24 an der Stelle/Position d. In der oberen Zeile e des Displays 24 wird der vorhergehende Messwert angezeigt. In der unteren Zeile g wird der aktuelle Messwert angezeigt, aber er wird nicht mehr dauernd aktualisiert

Wird ca. 5 min lang kein Bedienelement am Messwerkzeug betätigt, schaltet sich das Messgerät 10 zur Schonung der Batterien automatisch ab. Wurde ein Messwert über die "HOLD"-Funktion festgehalten, bleibt er bei der automatischen Abschaltung erhalten. Nach dem Wiedereinschalten des Messwerkzeugs durch Drücken der "HOLD"-Taste 22 wird der vorhergehende Messwert in der oberen Zeile e des Displays 24 angezeigt. Die Batterien können klassische Einmalzellen oder aber auch wiederaufladbare Akkuzellen sein. Im letzteren Fall können die Batterien fest im Gehäuse des Messgerätes integriert sein und über eine Schnittstelle, wie beispielweise eine USB, insbesondere Mini-USB, Schnittstelle wieder aufgeladen werden.

Nach einem automatischen Ausschalten des Gerätes kann dieses dann durch Verschieben des ersten Bedienelementes 20 wieder aktiviert werden.

Zum bewussten Ausschalten des Messwerkzeugs durch einen Bediener wird das erste Bedienelement 20, welches den Ein-/Ausschalter des Messgerätes 10 bildet, nach vorn, d.h. in Richtung auf das vordere Ende 16 verschoben, wobei er über dem zweiten Bedienelement 22 in der Position B zu liegen kommt und dieses zweite Bedienelement damit auch wieder abdeckt.

## Patentansprüche

1. Entfernungsmessgerät, insbesondere handgehaltener Laserentfernungsmesser, mit einem Gehäuse (12) und einer im Gehäuse (12) angeordneten Sendeeinheit zum Aussenden einer Messstrahlung (18) in Richtung auf ein Messobjekt, sowie mit einer Empfangseinheit zum Empfang von vom Messobjekt rücklaufender Messstrahlung (18), und mit einem ersten Bedienelement (20) zur Auslösung zumindest einer Entfernungsmessung, wobei das erste Bedienelement (20) in der Art eines Schiebelementes ausgebildet ist, **dadurch gekennzeichnet, dass** das Entfernungsmessgerät ein zweites Bedienelement (22), insbesondere ein Druck- oder Tastbedienelement (22), aufweist, das in einer Position des ersten Bedienelementes (20) von diesem abgedeckt oder überdeckt ist und das es in Abhängigkeit von der Position des ersten Bedienelementes (20) ermöglicht, eine Entfernungsmessung, insbesondere eine kontinuierliche, d.h. dauerhafte Entfernungsmessung, zu stoppen und/oder wieder zu starten und/oder zur Anzeige auf einem Display (24) des Gerätes (10) zu bringen.

2. Entfernungsmessgerät nach Anspruch 1, **dadurch gekennzeichnet, dass** das erste Bedienelement (20) verschiebbar am oder im Gehäuse (12) angeordnet ist.

3. Entfernungsmessgerät nach Anspruch 1 oder 2, **dadurch gekennzeichnet, dass** das erste Bedienelement (20) im Wesentlichen in Richtung des Messsignals verschiebbar angeordnet ist.

4. Entfernungsmessgerät nach einem der vorhergehenden Ansprüche, **dadurch gekennzeichnet, dass** das erste Bedienelement (20) in einer ersten Position (A), insbesondere einer ersten Schiebeposition, zumindest eine Entfernungsmessung startet.

5. Entfernungsmessgerät nach einem der vorhergehenden Ansprüche, **dadurch gekennzeichnet, dass** das erste Bedienelement (20) in einer ersten Position (A), insbesondere einer ersten Schiebeposition, eine kontinuierliche, d.h. dauerhafte Entfernungsmessung, startet.

6. Entfernungsmessgerät nach einem der vorhergehenden Ansprüche, **dadurch gekennzeichnet, dass** das erste Bedienelement (20) in einer zweiten Position (B), insbesondere einer zweiten Schiebeposition, das Gerät (10) ausschaltet.

7. Entfernungsmessgerät nach einem der vorhergehenden Ansprüche, **dadurch gekennzeichnet, dass** das zweite Bedienelement (22) eine kontinuierliche, d.h. dauerhafte Entfernungsmessung stoppt, insbesondere ein Aussenden eines Messsignals in Richtung auf ein Messobjekt, stoppt.

8. Entfernungsmessgerät nach einem der vorhergehenden Ansprüche, **dadurch gekennzeichnet, dass** das Gehäuse (12) des Gerätes (10) in Messrichtung eine Länge von weniger als 150 mm, insbesondere von weniger als 102 mm, hat.

9. Entfernungsmessgerät nach einem der vorhergehenden Ansprüche, **dadurch gekennzeichnet, dass** das Gehäuse (12) des Gerätes (10) quer zur Messrichtung, insbesondere senkrecht zur Messrichtung, eine Breite von weniger als 40 mm, insbesondere weniger als 37 mm, hat.

10. Entfernungsmessgerät nach einem der vorhergehenden Ansprüche, **dadurch gekennzeichnet, dass** das Gehäuse (12) des Gerätes (10) senkrecht zur Messrichtung und senkrecht zu seiner Breite, eine Höhe von weniger als 30 mm, insbesondere weniger als 25 mm, aufweist.

11. Entfernungsmessgerät nach einem der vorhergehenden Ansprüche, **dadurch gekennzeichnet, dass** das Gehäuse zumindest einen Single-Photon Avalanche Diode-Detektor beinhaltet.

12. Verfahren zum Betrieb eines Entfernungsmessgerätes, insbesondere Verfahren zum Betrieb eines handgehaltenen Laserentfernungsmessers, bei dem mittels eines ersten am Gehäuse (12) des Entfernungsmessgerätes (10) vorgesehenen Bedienelementes (20) zumindest eine erste Entfernungsmessung gestartet wird, wobei das erste Bedienelement (20) zur Auslösung einer ersten Entfernungsmessung, insbesondere zur Auslösung einer Abfolge von Entfernungsmessungen, insbesondere einer Abfolge von kontinuierlichen Entfernungsmessungen, aus einer zweiten Position (B), in der das Entfernungsmessgerät ausgeschaltet ist und das zweite Bedienelement (22) von dem ersten Bedienelement (20) abgedeckt oder überdeckt ist, in eine erste Position (A) verschoben, insbesondere entlang der Messachse der Entfernungsmessung, verschoben wird, **dadurch gekennzeichnet, dass** mittels eines zweiten am Gehäuse (12) des Entfernungsmessgerätes (10) vorgesehenen Bedienelements (22), insbesondere eines Druck- oder Tastbedienelements (22), in Abhängigkeit von der Position des ersten Bedienelementes (20), eine Entfernungsmessung, insbesondere eine kontinuierliche, d.h. dauerhafte Entfernungsmessung, gestoppt und/oder wieder gestartet und/oder zur Anzeige auf einem Display (24) des Gerätes (10) gebracht wird.

## Claims

1. Distance measuring device, in particular hand-held laser distance meter, having a housing (12) and a transmitting unit, arranged in the housing (12), for emitting a measuring radiation (18) in the direction of a measurement object, also having a receiving unit for receiving measuring radiation (18) returning from the measurement object, and having a first operating element (20) for triggering at least one distance measurement, wherein the first operating element (20) is designed as a type of slide element, **characterized in that** the distance measuring device has a second operating element (22), in particular a pressure or tactile operating element (22) which, in one position of the first operating element (20), is uncovered or covered by said operating element and which, depending on the position of the first operating element (20), enables a distance measurement, in particular a continuous, that is to say unbroken distance measurement to be stopped and/or to be started again and/or to be visualized on a display (24) of the device (10) .

2. Distance measuring device according to Claim 1, **characterized in that** the first operating element (20) is arranged slideably on or in the housing (12).

3. Distance measuring device according to Claim 1 or 2, **characterized in that** the first operating element (20) is arranged slideably substantially in the direction of the measurement signal.

4. Distance measuring device according to one of the preceding claims, **characterized in that** the first operating element (20) starts at least one distance measurement in a first position (A), in particular a first slide position.

5. Distance measuring device according to one of the preceding claims, **characterized in that** the first operating element (20) starts a continuous, that is to say unbroken distance measurement, in a first position (A), in particular a first slide position.

6. Distance measuring device according to one of the preceding claims, **characterized in that** the first operating element (20) switches off the device (10) in a second position (B), in particular a second slide position.

7. Distance measuring device according to one of the preceding claims, **characterized in that** the second operating element (22) stops a continuous, that is to say unbroken distance measurement, in particular stops a measurement signal from being emitted in the direction of a measurement object.

8. Distance measuring device according to one of the preceding claims, **characterized in that** the housing (12) of the device (10) has a length in the measurement direction of less than 150 mm, in particular of less than 102 mm.

9. Distance measuring device according to one of the preceding claims, **characterized in that** the housing (12) of the device (10) has a width of less than 40 mm, in particular less than 37 mm, transverse to the measurement direction, in particular perpendicular to the measurement direction.

10. Distance measuring device according to one of the preceding claims, **characterized in that** the housing (12) of the device (10) has a height of less than 30 mm, in particular less than 25 mm, perpendicular to the measurement direction and perpendicular to its width.

11. Distance measuring device according to one of the preceding claims, **characterized in that** the housing contains at least one Single Photon Avalanche Diode detector.

12. Method for operating a distance measuring device, in particular method for operating a hand-held laser distance meter, in the case of which at least a first distance measurement is started by means of a first operating element (20) provided on the housing (12) of the distance measuring device (10), wherein in order to trigger a first distance measurement, in particular to trigger a sequence of distance measurements, in particular a sequence of continuous distance measurements, the first operating element (20) is slid from a second position (B), in which the distance measuring device is switched off and the second operating element (22) is uncovered or covered by the first operating element (20), into a first position (A), in particular is slid along the axis of measurement of the distance measurement, **characterized in that**, by means of a second operating element (22) provided on the housing (12) of the distance measuring device (10), in particular a pressure or tactile operating element (22), depending on the position of the first operating element (20), a distance measurement, in particular a continuous, that is to say unbroken distance measurement, is stopped and/or started again and/or visualized on a display (24) of the device (10).

## Revendications

1. Appareil de télémétrie, notamment télémètre à laser portatif, comprenant un boîtier (12) et une unité d'émission disposée dans le boîtier (12) destinée à émettre un rayonnement de mesure (18) en direction d'un objet à mesurer, ainsi qu'une unité de réception destinée à recevoir le rayonnement de mesure (18) en retour depuis l'objet à mesurer, et comprenant un premier élément de commande (20) destiné à déclencher au moins une mesure de distance, le premier élément de commande (20) étant réalisé à la manière d'un élément coulissant, **caractérisé en ce que** le télémètre possède un deuxième élément de commande (22), notamment un élément de commande à pression ou à palpage (22), qui est masqué ou recouvert par le premier élément de commande (20) dans une position donnée de celui-ci et qui permet, en fonction de la position du premier élément de commande (20), d'arrêter et/ou de redémarrer une mesure de distance, notamment une mesure de distance continue, c'est-à-dire permanente, et/ou de l'afficher sur un dispositif d'affichage (24) de l'appareil (10).

2. Appareil de télémétrie selon la revendication 1, **caractérisé en ce que** le premier élément de commande (20) est disposé sur ou dans le boîtier (12).

3. Appareil de télémétrie selon la revendication 1 ou 2, **caractérisé en ce que** le premier élément de commande (20) est disposé de manière à pouvoir coulisser sensiblement dans la direction du signal de mesure.

4. Appareil de télémétrie selon l'une des revendications précédentes, **caractérisé en ce que** le premier élément de commande (20) démarre au moins une mesure de distance dans une première position (A), notamment dans une première position de coulissement.

5. Appareil de télémétrie selon l'une des revendications précédentes, **caractérisé en ce que** le premier élément de commande (20) démarre une mesure de distance continue, c'est-à-dire permanente, dans une première position (A), notamment dans une première position de coulissement.

6. Appareil de télémétrie selon l'une des revendications précédentes, **caractérisé en ce que** le premier élément de commande (20) éteint l'appareil (10) dans une deuxième position (B), notamment dans une deuxième position de coulissement.

7. Appareil de télémétrie selon l'une des revendications précédentes, **caractérisé en ce que** le deuxième élément de commande (22) arrête une mesure de distance continue, c'est-à-dire permanente, notamment arrête une émission d'un signal de mesure en direction d'un objet à mesurer.

8. Appareil de télémétrie selon l'une des revendications précédentes, **caractérisé en ce que** le boîtier (12) de l'appareil (10) présente, dans la direction de la mesure, une longueur inférieure à 150 mm, notamment inférieure à 102 mm.

9. Appareil de télémétrie selon l'une des revendications précédentes, **caractérisé en ce que** le boîtier (12) de l'appareil (10) présente, transversalement à la direction de la mesure, une largeur inférieure à 40 mm, notamment inférieure à 37 mm.

10. Appareil de télémétrie selon l'une des revendications précédentes, **caractérisé en ce que** le boîtier (12) de l'appareil (10) présente, perpendiculairement la direction de la mesure et perpendiculairement à sa largeur, une hauteur inférieure à 30 mm, notamment inférieure à 25 mm.

11. Appareil de télémétrie selon l'une des revendications précédentes, **caractérisé en ce que** le boîtier contient au moins un détecteur à diode à avalanche de photon unique.

12. Procédé pour faire fonctionner un appareil de télémétrie, notamment procédé pour faire fonctionner un télémètre à laser portatif, avec lequel au moins une première mesure de distance est démarrée au moyen d'un premier élément de commande (20) présent sur le boîtier (12) de l'appareil de télémétrie (10), le premier élément de commande (20), en vue de déclencher une première mesure de distance, notamment en vue de déclencher une séquence de mesures de distance, notamment en vue de déclencher une séquence de mesures de distance continues, étant déplacé d'une deuxième position (B), dans laquelle l'appareil de télémétrie est éteint et le deuxième élément de commande (22) est masqué ou recouvert par le premier élément de commande (20), dans une première position (A), notamment déplacé le long de l'axe de mesure de la mesure de distance, **caractérisé en ce qu'**une mesure de distance, notamment une mesure de distance continue, c'est-à-dire permanente, est arrêtée et/ou redémarrée et/ou affichée sur un dispositif d'affichage (24) de l'appareil (10), en fonction de la position du premier élément de commande (20), au moyen d'un deuxième élément de commande (22) présent sur le boîtier (12) de l'appareil de télémétrie (10), notamment un élément de commande à pression ou à palpage (22).
